# EUROPÄISCHE PATENTSCHRIFT

(11) **EP 0 538 629 B1**
(45) Veröffentlichungstag und Bekanntmachung des Hinweises auf die Patenterteilung: **31.05.1995**
(21) Anmeldenummer: 92116106.3
(22) Anmeldetag: 21.09.1992
(51) Int. Cl.: H04B 3/23

(54) **Verfahren und Anordnung zur Echokompensation**
Method and arrangement for echo cancelling
Procédé et dispositif d'annulation d'écho

(30) Priorität: 25.10.1991 DE 4135321
(43) Veröffentlichungstag der Anmeldung: 28.04.1993
(73) Patentinhaber: SIEMENS AKTIENGESELLSCHAFT, 80333 München (DE)
(72) Erfinder: Waretzi, Erhard, Dipl.-Ing.(FH), W-8013 Haar (DE)

(56) Entgegenhaltungen:
- US-A- 4 645 883
- US-A- 4 782 525
- TELCOM REPORT Bd. 10 , März 1987 , MUNCHEN DE Seiten 82 - 87 KAMMESIES ET AL. 'ECHOKOMPENSATOR IN WELTWEITEN NACHRICHTENVERBINDUNGEN'

## Beschreibung

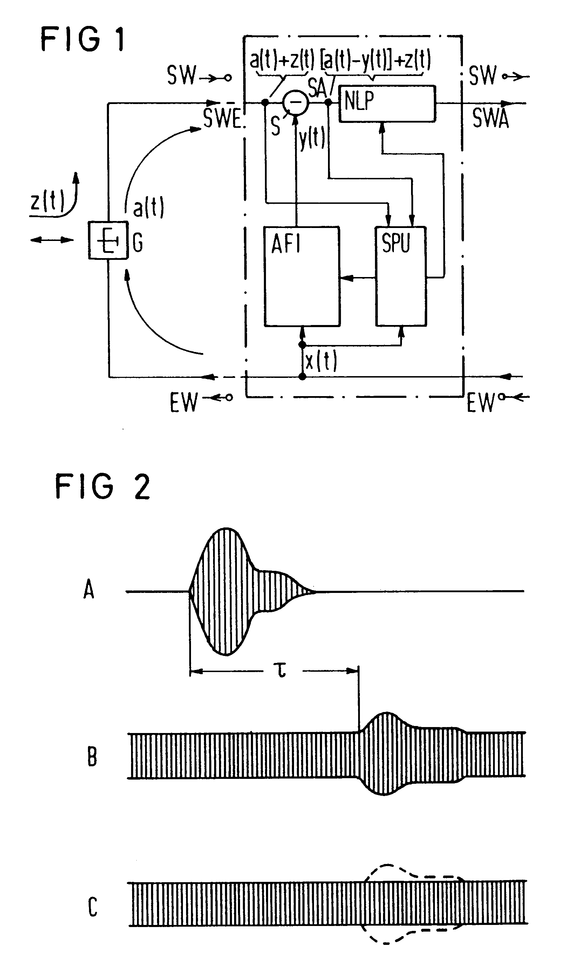

In dem Sonderheft "telcom report, Special, Multiplex- und Leitungseinrichtungen", 10 (1987) März, Seiten 82 bis 87, ist ein Echokompensator in weltweiten Nachrichtenverbindungen beschrieben. Dieser enthält, wie beiliegende Figur 1 zeigt, ein steuerbares Digitalfilter AFI, einen Subtrahierer S, eine Steuerung SPU sowie einen Restechobegrenzer NLP und ist auf der Vierdrahtseite eines durch eine Gabel G gebildeten Zweidraht/Vierdraht-Übergangs angeordnet. Die Zweidrahtleitung führt zu einem nahen und die Vierdrahtleitung zu einem fernen Teilnehmer.

Vom Empfangswegsignal x(t) des fernen Teilnehmers gelangt auf den Sendewegeingang SWE über die Gabel G ein Echosignal a(t). Zu diesem addiert sich ein Signalanteil z(t) vom nahen Teilnehmer. Das steuerbare Digitalfilter AFI stellt eine Nachbildung des Echoweges dar und erzeugt, während es vom Empfangswegsignal x(t) durchlaufen wird, ein künstliches Echosignal y(t). In dem Subtrahierer S wird dieses von den Signalteilen am Sendewegeingang SWE abgezogen. Eine Regelschaltung verstellt das steuerbare Digitalfilter AFI solange, bis das Signal am Ausgang SA des Subtrahierers S weitgehend frei von Echo ist.

Der Restechobegrenzer NLP beseitigt das verbleibende Restecho, indem er nur solche Signale zum Sendewegausgang SWA gelangen läßt, die eine bestimmte Schwelle überschreiten. Diese wird von der Steuerung SPU immer so gelegt, daß sie gerade noch über dem Pegel des zu erwartenden Restechos bleibt. Der Restechobegrenzer NLP wird jedoch nur dann wirksam, wenn der ferne Teilnehmer spricht, auf keinen Fall aber während eines Doppelsprechens. Seine Wirkung ist mit der eines Schalters vergleichbar, der den Sendewegausgang SWA auftrennt, solange der ferne Teilnehmer allein spricht, und diesen sofort schließt, wenn der nahe Teilnehmer spricht oder der ferne Teilnehmer schweigt.

Ist beim nahen Teilnehmer ein permanentes Raumgeräusch wie das Fahrgeräusch in einem Auto oder das Geräusch eines Lüfters in einem Zimmer vorhanden, dann wird auch dieses neben dem Restecho unterdrückt. Je stärker das Raumgeräusch ist, desto störender werden die Unterbrechnungen jedoch vom fernen Teilnehmer empfunden.

Aus dem "CCITT Blue Book, Vol. III-Fascicle III.1, General Characteristics of International Telephone Connections and Circuits", Melbourne 14.-25.11.88, Genf 1989, Seite 196, Abschnitt a) ist die Einblendung eines Ersatzrauschens während der aktiven Phase des Restechobegrenzers bekannt. Der Nachteil dieser Methode ist jedoch, daß die Klangfarbe des Ersatzrauschens zumeist von der des Raumgeräusches erheblich abweicht und dem fernen Teilnehmer deshalb auffällt.

Der im Anspruch 1 angegebenen Erfindung liegt das Problem zugrunde, den störenden Eindruck von Leitungsunterbrechungen oder von Klangfarbeänderungen bei Ersatzrauschen zu vermeiden.

Der Signalanteil (z)t vom nahen Teilnehmer ist hier in den Signalanteil z₁(t) der Sprache und in den Signalanteil z₂(t) des Raumgeräusches aufgeteilt.

Eine vorteilhafte Ausgestaltung des erfindungsgemäßen Verfahrens ist im Anspruch 2 angegeben. Anspruch 3 beschreibt einen Echokompensator, mit dem das erfindungsgemäße Verfahren durchgeführt wird, und Anspruch 4 eine verwendete Siebschaltung.

Ein Ausführungsbeispiel der Erfindung ist in der Zeichnung dargestellt.

Es zeigen
- Fig. 1: das bereits erläuterte bekannte Blockschaltbild eines Echokompensators,
- Fig. 2: Signale beim fernen Teilnehmer,
- Fig. 3: die Erfindung betreffende Anordnungsteile und
- Fig. 4: eine Siebschaltung.

Figur 2 zeigt ein Sendesignal A und ein zugehöriges Empfangssignal B beim fernen Teilnehmer mit Hüllkurve für den Fall, daß die Erfindung nicht eingesetzt ist. Das Empfangssignal enthält ständig den Signalanteil z₂(t) des Raumgeräusch beim nahen Teilnehmer. Zusätzlich taucht nach der Echo-Laufzeit störend das überlagerte Restecho des Sendesignals A auf. Beim Empfangssignal C beim fernen Teilnehmer ist wegen Einsatz der Erfindung das Restecho infolge Begrenzung auf den Signalanteil z₂(t) dagegen beseitigt.

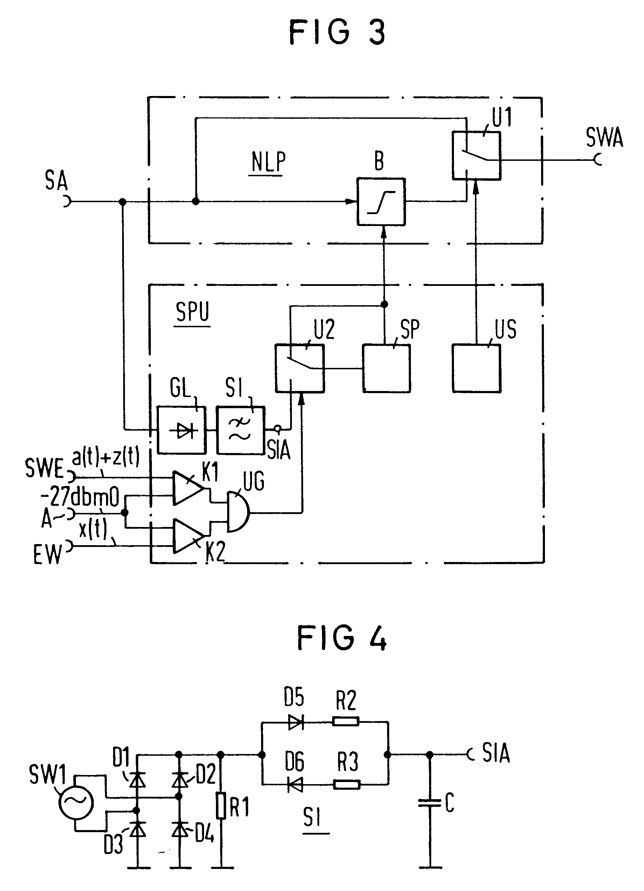

Figur 3 zeigt den Restechobegrenzer NLP und die Steuerschaltung SPU, soweit sie zur Steuerung von ersterem erforderlich ist.

Der Restechobegrenzer NLP enthält einen Amplitudenbegrenzer B und einen Umschalter U1. Die Steuerschaltung SPU beinhaltet unter anderem Komparatoren K1 und K2, ein UND-Gatter UG, einen Zweiweggleichrichter GL, eine Siebschaltung SI, einen Umschalter U2, einen Speicher SP und eine Umschaltersteuerung US.

Der Komparator K1 vergleicht das Signal a(t) + z₁(t) + z₂(t) am Sendewegeingang SWE und der Komparator K2 vergleicht das Empfangswegsignal x(t) mit einem Pegel -27 dbmO am Anschluß A. Sind beide kleiner als der Pegel -27 dbmO, dann erhält der Ausgang des UND-Gatters UG einen Zustand logisch "1", weil eine Gesprächspause herrscht. Der Umschalter U2 wird dann so gesteuert, daß der Ausgang SIA der Siebschaltung SI mit dem Eingang des Speichers SP verbunden ist. Das gleichgerichtete und gesiebte Signal vom Subtrahiererausgang SA wird im Speicher SP gespeichert.

Ändern sich die Bedingungen an den Eingängen des UND-Gatters UG, ist also die Gesprächspause beendet, dann verbindet der Umschalter U2 den Ausgang mit dem Eingang des Speichers SP und dieser wird ständig wieder mit dem gleichen Wert geladen.

Die Umschaltersteuerung US verbindet über den Umschalter U1 den Subtrahiererausgang SA mit dem Sendewegausgang SWA entweder unmittelbar oder über den Amplitudenbegrenzer B, dessen Begrenzungswert über die Ladung des Speichers SP gesteuert wird.

Figur 4 zeigt eine analoge Ersatzschaltung der Siebschaltung SI detailliert. Sie enthält einen Zweiweggleichrichter D1 bis D4, weitere Dioden D5 und D6, Widerstände R1 bis R3 und einen Kondensator C.

Das Signal am Subtrahierer SA wird durch die Dioden D1 bis D4 gleichgerichtet und gelangt an ein Tiefpaß- -Glied. Der Kondensator C wird langsam über die Diode 5 und den hochohmigen Ladewiderstand R2 auf den Geräuschpegel des Subtrahiererausgangssignals aufgeladen. Er entlädt sich schnell über den niederohmigen Entladewiderstand R3 und die Diode D6, wenn der Geräuschpegel absinken sollte. Dadurch entsteht eine Unempfindlichkeit gegen die Sprache des nahen Teilnehmers.

## Patentansprüche

1. Verfahren zur Echokompensation an einem Zweidraht/Vierdrahtübergang in einer Nachrichtenverbindung,
bei dem vom Echosignal a(t) eines fernen Teilnehmers, vom Signalanteil z₁(t) der Sprache eines nahen Teilnehmers und vom Signalanteil z₂(t) des Raumgeräuschs beim nahen Teilnehmer jeweils am Sendewegeingang (SWE) ein künstliches Echosignal y(t) abgezogen wird und
bei dem das kompensierte Signal a(t) - y(t) + z₁(t) + z₂(t) verändert wird, wenn es kleiner als ein vom Empfangswegsignal x(t) abgeleiteter Schwellenwert ist,
**dadurch gekennzeichnet**,
daß als Veränderung des kompensierten Signals a(t) - y(t) + z₁(t) + z₂(t) eine Begrenzung auf den Signalanteil z₂(t) vorgenommen wird.

2. Verfahren nach Anspruch 1,
**dadurch gekennzeichnet**,
daß der Signalanteil z₂(t) in jeder Gesprächspause gemessen und für eine Einstellung der Begrenzung gespeichert wird.

3. Echokompensator
mit einem Subtrahierer (S), dessen Minuend-Eingang mit einem Sendewegeingang (SWE) verbunden ist,
mit einem steuerbaren Digitalfilter (AFI), dessen Eingang mit einem Empfangsweg (EW) und dessen Ausgang mit einem Subtrahier-Eingang des Subtrahierers (S) verbunden ist,
mit einem Restechobegrenzer (NLP), dessen Eingang mit dem Ausgang (SA) des Subtrahierers (S) und dessen Ausgang mit einem Sendewegausgang (SWA) verbunden ist, und
mit einer Steuerschaltung (SPU), deren erster Eingang mit dem Empfangsweg (EW), deren zweiter Eingang mit dem Sendewegseingang (SWE), deren dritter Eingang mit dem Ausgang (SA) des Subtrahierers (S), deren erster Ausgang mit einem Steuereingang des steuerbaren Digitalfilters (AFI) und dessen zweiter Ausgang mit einem Steuereingang des Restechobegrenzers (NLP) verbunden ist,
**dadurch gekennzeichnet**,
daß als Restechobegrenzer (NLP) ein erster Umschalter (U1) vorgesehen ist, dessen erster Eingang unmittelbar und dessen zweiter Eingang über einen Amplitudenbegrenzer (B) mit dem Ausgang (SA) des Subtrahierers (S) verbunden ist und dessen Ausgang den Sendewegausgang (SWA) bildet, und daß in der Steuerschaltung (SPU) ein Speicher (SP), dessen Ausgang mit einem Steuereingang des Amplitudenbegrenzers (B) verbunden ist, ein zweiter Umschalter (U2), dessen erster Eingang mit dem Ausgang des Speichers (SP) und dessen Ausgang mit dem Eingang des Speichers (SP) verbunden ist, ein Zweiweggleichrichter (GL), dessen Eingang mit dem Ausgang (SA) des Subtrahierers (S) verbunden ist, eine Siebschaltung (SI), deren Eingang mit dem Ausgang des Zweiweggleichrichters (GL) und deren Ausgang mit dem zweiten Eingang des zweiten Umschalters (U2) verbunden ist, ein erster Komparator (K1), dessen erster Eingang mit dem Sendewegeingang (SWE) und dessen zweiter Eingang mit einem Anschluß (A) für einen definierten Pegel verbunden ist, ein zweiter Komparator (K2), dessen erster Eingang mit dem Empfangsweg (EW) und dessen zweiter Eingang mit dem Anschluß (A) verbunden ist, und ein UND-Gatter (UG) vorgesehen ist, dessen erster Eingang mit dem Ausgang des ersten Komparators (K1) und dessen zweiter Eingang mit dem Ausgang des zweiten Komparators (K2) verbunden ist und dessen Ausgang mit einem Steuereingang des zweiten Umschalters (U2) verbunden ist.

4. Echokompensator nach Anspruch 3,
**dadurch gekennzeichnet**,
daß der Siebschaltung (SI) ein Zweiweggleichrichter (D1 bis D4) vorgeschaltet ist, daß der Ausgang des Zweiweggleichrichters (D1 bis D4) mit der Parallelschaltung aus einer ersten Reihenschaltung mit einer Diode (D5) und einem Widerstand (R2) und einer zweiten Reihenschaltung mit einer weiteren Diode (D6), deren Durchlaßrichtung entgegengesetzt ist, und eines weiteren Widerstandes (R3) verbunden ist, und daß der Ausgang der Parallelschaltung mit einem an einem BE-zugspotential (I) liegenden Kondensator (C) verbunden ist.

## Claims

1. Method for echo cancelling on a two-wire/four-wire hybrid in a communication connection, in which an artificial echo signal y(t) is substracted from the echo signal a(t) of a remote subscriber, from the signal component z₁(t) of the voice of a near subscriber and from the signal component z₂(t) of the room noise at the near subscriber in each case at the transmitting path input (SWE) and in which the signal subject to cancellation a(t) - y(t) + z₁(t) + z₂(t) is modified when it is less than a threshold value derived from the receiving path signal x(t), characterized in that a limiting to the signal component z₂(t) is performed as modification of the signal subject to cancellation a(t) - y(t) + z₁(t) + z₂(t).

2. Method according to Claim 1, characterized in that the signal component z₂(t) is measured in each pause in the conversation and is stored for setting the limiting.

3. Echo canceller comprising a subtracter (S), the minuend input of which is connected to a transmitting path input (SWE), with a controllable digital filter (AFI), the input of which is connected to a receiving path (EW) and the output of which is connected to a subtracting input of the subtracter (S), with a residual echo limiter (NLP), the input of which is connected to the output (SA) of the subtracter (S) and the output of which is connected to a transmitting path output (SWA), and with a control circuit (SPU), the first input of which is connected to the receiving path (EW), the second input of which is connected to the transmitting path input (SWE), the third input of which is connected to the output (SA) of the subtracter (S), the first output of which is connected to a control input of the controllable digital filter (AFI) and the second output of which is connected to a control input of the residual echo limiter (NLP), characterized in that, as residual echo limiter (NLP), a first change-over switch (U1) is provided, the first input of which is connected directly, and the second input of which is connected via an amplitude limiter (B), to the output (SA) of the subtracter (S) and the output of which forms the transmitting path output (SWA), and in that, in the control circuit (SPU), a memory (SP), the output of which is connected to a control input of the amplitude limiter (B), a second change-over switch (U2), the first input of which is connected to the output of the memory (SP) and the output of which is connected to the input of the memory (SP), a full-wave rectifier (GL), the input of which is connected to the output (SA) of the subtracter (S), a filter circuit (SI), the input of which is connected to the output of the full-wave rectifier (GL) and the output of which is connected to the second input of the second change-over switch (U2), a first comparator (K1), the first input of which is connected to the transmitting path input (SWE) and the second input of which is connected to a connection (A) for a defined level, a second comparator (K2), the first input of which is connected to the receiving path (EW) and the second input of which is connected to the connection (A), and an AND gate (UG) are provided, the first input of which is connected to the output of the first comparator (K1) and the second input of which is connected to the output of the second comparator (K2) and the output of which is connected to a control input of the second change-over switch (U2).

4. Echo canceller according to Claim 3, characterized in that the filter circuit (SI) is preceded by a full-wave rectifier (D1 to D4), in that the output of the full-wave rectifier (D1 to D4) is connected to the parallel circuit of a first series circuit comprising a diode (D5) and a resistor (R2) and a second series circuit comprising a further diode (D6), the forward direction of which is opposite, and of a further resistor (R3), and in that the output of the parallel circuit is connected to a capacitor (C) connected to a reference potential (I).

## Revendications

1. Procédé pour réaliser la compensation d'échos au niveau d'une jonction deux fils/quatre fils dans une liaison de transmission d'informations,
selon lequel un signal artificiel d'écho y(t) est dérivé du signal d'écho a(t) d'un abonné éloigné, de la composante de signal z₁(t) du signal vocal d'un abonné proche et de la composante de signal z₂(t) du bruit ambiant au niveau de l'abonné proche, respectivement au niveau de l'entrée (SWE) de la branche d'émission, et
selon lequel le signal compensé a(t)-y(t)+z₁(t)+z₂(t) est modifié lorsqu'il est inférieur à une valeur de seuil dérivée du signal x(t) du trajet de réception,
caractérisé par le fait qu'une limitation est appliquée à la composante de signal z₂(t) en tant que modification du signal compensé a(t)-y(t)+z₁(t)+z₂(t).

2. Procédé suivant la revendication 1, caractérisé par le fait que la composante de signal z₂(t) est mesurée pendant chaque pause de conversation et est mémorisée pour un réglage de la limitation.

3. Compensateur d'échos, comportant
un soustracteur (S), dont l'entrée du minuende est reliée à une entrée (SWE) de la voie d'émission,
un filtre numérique commandable (AFI), dont l'entrée est reliée à une voie de réception (EW) et dont la sortie est reliée à une sortie de soustraction du soustracteur (S),
un limiteur d'échos résiduels (NLP), dont l'entrée est reliée à la sortie (SA) du soustracteur (S) et dont la sortie est reliée à une sortie (SWA) de la voie d'émission, et
un circuit de commande (SPU), dont la première entrée est reliée à la voie de réception (EW), dont la seconde entrée est reliée à l'entrée (SWE) de la voie d'émission, dont la troisième entrée est reliée à la sortie (SA) du soustracteur (S), dont la première sortie est reliée à une entrée de commande du filtre numérique commandable (AFI) et dont la seconde sortie est reliée à une entrée de commande du limiteur d'échos résiduels (NLP),
caractérisé par le fait
qu'il est prévu, comme limiteur d'échos résiduels (NLP), un premier commutateur (U1), dont la première entrée est reliée directement et dont la seconde entrée est reliée, par l'intermédiaire d'un limiteur d'amplitude (B), à la sortie (SA) du soustracteur (S) et dont la sortie forme la sortie (SWA) de la voie d'émission, et que dans le circuit de commande (SPU) est prévu une mémoire (SP), dont la sortie est reliée à une entrée de commande du limiteur d'amplitude (B), un second commutateur (U2), dont la première entrée est reliée à la sortie de la mémoire (SP) et dont la sortie est reliée à l'entrée de la mémoire (SP), un redresseur double alternance (GL) dont l'entrée est reliée à la sortie (SA) du soustracteur (S), un circuit de lissage (SI), dont l'entrée est reliée à la sortie du redresseur double alternance (GL) et dont la sortie est reliée à la seconde entrée du second commutateur (U2), un premier comparateur (K1), dont la première entrée est reliée à une entrée (SWE) de la voie d'émission et dont la seconde entrée est reliée à une borne (A) pour un niveau défini, un second comparateur (K2), dont la première entrée est reliée à la voie de réception (EW) et dont la seconde entrée est reliée à la borne (A), et une porte ET (UG), dont la première entrée est reliée à la sortie du premier comparateur (K1) et dont la seconde entrée est reliée à la sortie du second comparateur (K2) dont la sortie est raccordée à une unité de commande du second commutateur (U2).

4. Compensateur d'échos suivant la revendication 3, caractérisé par le fait qu'un redresseur double alternance (D1 à D4) est branché en amont du circuit de lissage (SI), que la sortie du redresseur double alternance (D1 à D4) est reliée au montage en parallèle constitué par un premier circuit série formé d'une diode (D5) et d'une résistance (R2) et à un second montage série formé d'une autre diode (D6), dont le sens passant est dirigé en sens opposé, et d'une autre résistance (R3), et que la sortie du circuit parallèle est reliée à un condensateur (C) qui est placé à un potentiel de référence (I).
